# EUROPÄISCHE PATENTSCHRIFT

(11) **EP 2 361 890 B1**
(45) Veröffentlichungstag und Bekanntmachung des Hinweises auf die Patenterteilung: **12.07.2017**
(21) Anmeldenummer: 11154890.5
(22) Anmeldetag: 17.02.2011
(51) Int. Cl.: C03B 5/187, B01F 7/20, B01F 15/00, F27D 27/00, B01F 7/00

(54) **Vorrichtung zum Homogenisieren einer Glasschmelze und Verwendung derselben**
Device for homogenising molten glass and its use
Dispositif d'homogénéisation d'un bain de verre et son utilisation

(30) Priorität: 25.02.2010 DE 102010000546
(43) Veröffentlichungstag der Anmeldung: 31.08.2011
(73) Patentinhaber: Schott AG, 55122 Mainz (DE)
(72) Erfinder: Lentes, Frank-Thomas, Dr., 55411 Bingen (DE); Naumann, Karin, 55270 Ober-Olm (DE); Berndhäuser, Christoph, 55268 Nieder-Olm (DE); Zemsch, Erhard, 95666 Mitterteich (DE); Trinks, Volker, Dr., 95666 Mitterteich (DE)
(74) Vertreter: 2K Patentanwälte Blasberg Kewitz & Reichel

(56) Entgegenhaltungen:
- EP-A1- 0 591 556
- WO-A1-2009/121684
- DE-A1-102004 032 795
- US-A- 1 129 158
- US-A- 2 891 777
- US-A1- 2008 159 068
- US-A1- 2009 071 336
- DATABASE WPI Week 201031 Thomson Scientific, London, GB; AN 2010-E86201 XP002726934, -& TW 201 016 624 A (AVANSTRATE INC) 1. Mai 2010 (2010-05-01)

## Beschreibung

Die vorliegende Erfindung betrifft das Homogenisieren einer Glasschmelze, insbesondere das Homogenisieren einer Glasschmelze, die zur Herstellung eines Glas- oder Glaskeramikprodukts von hoher Qualität und mit einer geringen Dichte an Einschlüssen, und/oder Fehlstellen verwendet wird, beispielsweise von Displayglas oder von Glasrohren.

Ziel des Homogenisierens einer Glasschmelze ist es, räumliche und zeitliche Schwankungen der chemischen Zusammensetzung der Glasschmelze, entsprechend den Produktanforderungen, zu reduzieren. Denn chemische Inhomogenitäten führen zu Inhomogenitäten der Brechzahl, die beispielsweise die optische Abbildung beeinträchtigen können, und zu Inhomogenitäten der Viskosität, die bei Heißverarbeitungsprozessen beispielsweise zu unkontrollierten Geometrieschwankungen führen können. Dabei wird unterschieden zwischen Makro-Inhomogenitäten, also einer Variation einer chemischen Zusammensetzung auf vergleichsweise großen räumlichen Skalen, beispielsweise von einigen Zentimetern, mit kleinen räumlichen Gradienten, und Mikro-Inhomogenitäten (auch Schlieren genannt), also einer Variation der chemischen Zusammensetzung auf kleinen räumlichen Skalen, beispielsweise von 0,1 bis 2 mm, mit teilweise großen räumlichen Gradienten. Ziel des Homogenisierungsprozesses ist, die Makro-Inhomogenitäten und die Mikro-Inhomogenitäten soweit als möglich zu beseitigen, so dass beispielsweise ein glatter Brechzahlverlauf erhalten werden kann. Üblicherweise weisen die verwendeten Glasschmelzen eine Viskosität zwischen etwa 1 und 200 Pa·s auf, was eine laminare Strömung der Glasschmelze bewirkt (Roynolds-Zahl < 1). Der chemische Diffusionskoeffizient ist normalerweise kleiner als 10-12 m²/s, so dass die durch Diffusion erreichbare Homogenisierung vernachlässigbar klein ist. Daher kann eine Homogenisierung in Glasschmelzen im Wesentlichen nur dadurch erreicht werden, dass lokale Inhomogenitäten bzw. Schlieren stark gedehnt, umverteilt und zerhackt werden. Zu diesem Zweck werden Rührsysteme verwendet, die ein Rührgefäß bzw. einen Schmelzenbehälter zur vorübergehenden Aufnahme der Glasschmelze sowie zumindest eine Rührvorrichtung zum Rühren der Glasschmelze aufweisen.

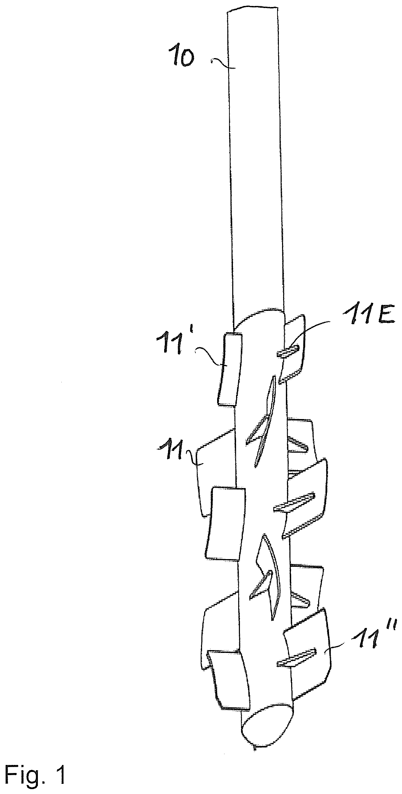

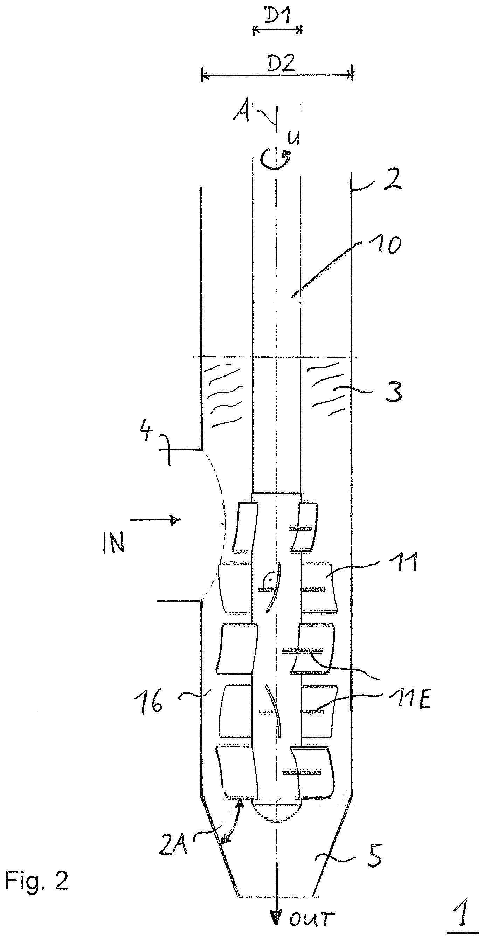

Aus der WO 2009/121684 A1 (s. Abstract und Fig. 1B) ist eine Vorrichtung ("stirrer 3") zum Homogenisieren einer Glasschmelze mit mindestens einer Rührvorrichtung ("stirring system") bekannt, die in einem die Glasschmelze aufnehmendes Rührgefäß ("stirring vessel 1") angeordnet ist, das einen Einlass ("11") und einen Auslass ("12") aufweist. Die Rührvorrichtung ("stirrer 3") enthält eine in Umlaufrichtung drehbare Rührwelle ("shaft 30") und eine Vielzahl von Rührerflügeln (z.B. in Fig. 2D "stirring elements 104"), die entlang der Rührwelle beabstandet zueinander angeordnet sind, um entlang der Rührerwelle eine Förderwirkung auf die Glasschmelze von dem Einlass zu dem Auslass hin zu erzeugen. Beispielsweise sind die Rührerflügel als plattenförmige Elemente ("metal sheets 140 & 141") ausgebildet, die schräg zur Umlaufrichtung der Rührwelle angeordnete bzw. angestellte Paddelflächen ("140") aufweisen, so dass die Glasschmelze spiralförmig entlang der Rührerwelle ("30") zum Auslass ("12") hin transportiert wird.

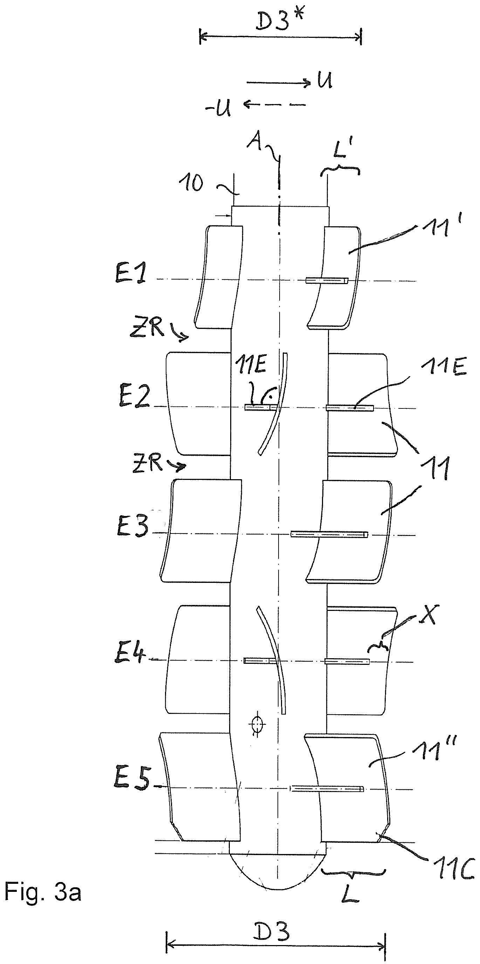

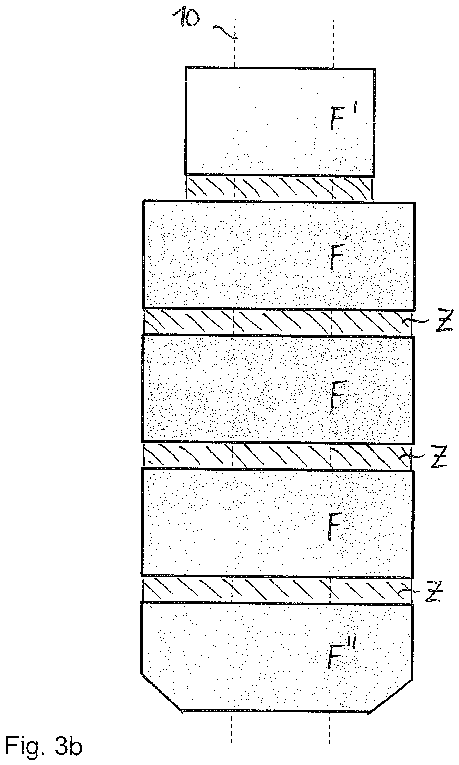

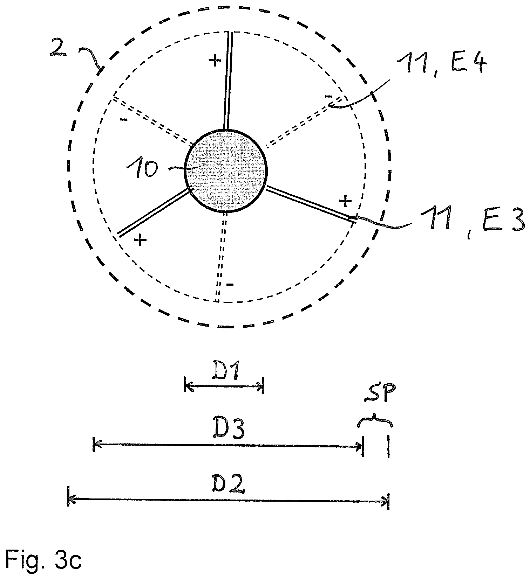

Aus der US 289 1 777 A ist ebenfalls eine vorrichtung bzw. ein Rührstab zum Homogenisieren einer Glasschmelze mit mindestens einer Rührvorrichtung bekannt, die in einem die Glasschmelze aufnehmendes Rührgefäß ("11") angeordnet ist, das einen Einlass ("14") und einen Auslass ("13") aufweist. Die Rührvorrichtung bzw. der Rühstab enthält eine in Umlaufrichtung drehbare Rührwelle ("shaft 18") und eine Vielzahl von Rührerflügeln ("sets of blades"), die entlang der Rührwelle beabstandet zueinander angeordnet sind, um entlang der Rührerwelle eine Förderwirkung auf die Glasschmelze von dem Einlass zu dem Auslass hin zu erzeugen. Die Rührerflügel weisen quer zur Umlaufrichtung der Rührwelle angeordnete bzw. angestellte Paddelflächen ("19, 21") mit Stützen ("ribs or webs 20") auf, die senkrecht dazu angeordnet sind (s. dort Fig. 3).

Als weitere Druckschriften aus dem Stand der Technik sind zu nennen: US 2008/159068 A1; DE 10 2004 032 795 A1; US 2009/071336 A1; US 1 129 158 A und EP 0 591 556 A1. Zudem wird auf TW 2010 16624 A verwiesen, einem Dokument, das zwischen dem Prioritätstag und dem Anmeldetag der vorliegenden Patentanmeldung veröffentlicht worden ist.

In der DE 10 2007 035 203 A1 ist eine Vorrichtung zum Homogenisieren einer Glasschmelze mit mindestens einer Rührvorrichtung beschrieben, die in einem die Glasschmelze aufnehmendes Rührgefäß angeordnet ist, das einen Einlass und einen Auslass aufweist. Die Rührvorrichtung enthält eine in Umlaufrichtung drehbare Rührwelle und eine Vielzahl von Rührerflügeln, die entlang der Rührwelle beabstandet zueinander angeordnet sind, um entlang der Rührerwelle eine Förderwirkung auf die Glasschmelze von dem Einlass zu dem Auslass hin zu erzeugen. Beispielsweise sind die Rührerflügel als plattenförmige Elemente ausgebildet, die schräg zur Umlaufrichtung der Rührwelle angeordnete bzw. angestellte Paddelflächen aufweisen, so dass die Glasschmelze spiralförmig entlang der Rührerwelle zum Auslass hin transportiert wird. Zur Änderung des Homogenisierungsgrades könnte u.a. die Drehzahl der umlaufenden Rührerwelle variiert werden, was aber mit einer Änderung des Gesamtdurchsatzes einhergehen würde und auch zu einem Druckabfall führen könnte. Um dies zu vermeiden wird dort insbesondere vorgeschlagen, dass zumindest zwei der Rührerflügel entgegengesetzt angestellt sind und diese somit die Förderwirkung vom Einlass zum Auslass deutlich verringern bzw. sogar soweit reduzieren, dass diese verschwindend gering ist.

Aus der JP 2004 224 637 A ist eine Rührvorrichtung zum Rühren einer Glasschmelze bekannt. Die Rührvorrichtung bzw. der Rührer ist mit einem an der Rührerwelle angeordneten spiralförmigen Schraubenblatt ("stirring blade 12") versehen, das die Rührerwelle in Längsrichtung in Form einer Spirale oder Schnecke umfasst. In einer dort offenbarten Ausführungsform sind an der Pührerwelle auch mehrere Rührerflügel vorgesehen, die als paddelförmige Elemente ausgebildet sind (s. Elemente "14" in Fig. 2D), welche sich radial von der Rührerwelle erstrecken. Das spiralförmige Schraubenblatt ist mit den paddelförmigen Rührerflügeln integriert an der Rührerwelle angeordnet, so dass die paddelförmigen Rührerflügel das Schraubenblatt in mehrere Abschnitte unterteilt.

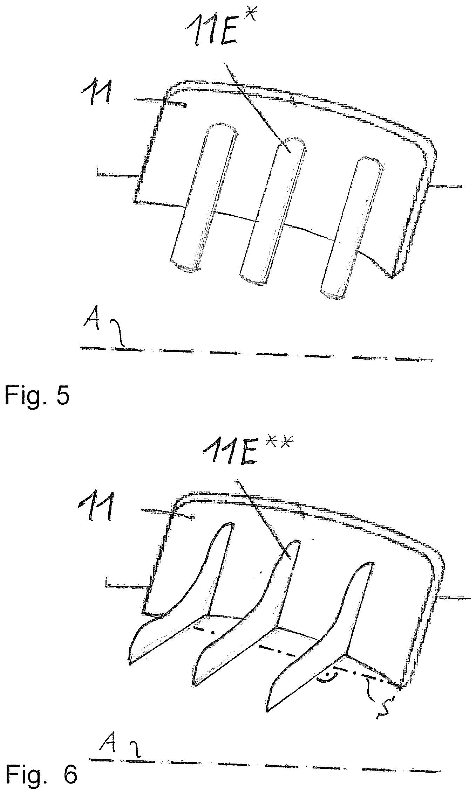

Aus der US 2,891,777 A ist eine weitere Rührvorrichtung zum Rühren einer Glasschmelze bekannt. Die Rührvorrichtung bzw. der Rührer weist mehrere Rührerflügel auf, die als paddelförmige Elemente ausgebildet sind (s. "19" in Figuren 3 und 5) und die auf mehreren Ebenen entlang der Rührwelle beabstandet zueinander angeordnet sind. Die paddelförmigen Rührerflügel werden durch Einbauelemente ("ribs or webs 20") verstärkt, welche sich jeweils von der Paddelfläche zur Rührerwelle hin erstrecken.

In der DE 10 2006 060 972 A1 wird eine Vorrichtung zum Homogenisieren einer Glasschmelze vorgeschlagen, die ebenfalls mindestens eine Rührvorrichtung aufweist, bei der eine Vielzahl von Rührerflügeln auf einer drehbaren Rührwelle beabstandet zueinander angeordnet sind. Dort werden insbesondere folgende Probleme behandelt: Damit bei hohen Viskositäten und kleinen chemischen Diffusionskoeffizienten, überhaupt eine geeignete Homogenisierung erzielt werden kann, müsste ein möglichst schmaler Spalt zwischen den Rührerflügeln und der Innenwandung des Rührgefäßes bzw. Schmelzenbehälters vorgesehen werden. Das jedoch birgt die Gefahr, dass der Rührer die Gefäßwand berührt und es dadurch zur Beschädigung oder gar zur Zerstörung der Rührvorrichtung kommen kann. Zumindest treten hohe Scherspannungen zwischen Rührerflügel und Schmelzenbehälterwand auf, die die Lebensdauer des Rührsystems erheblich beeinträchtigen können. Auch besteht die Gefahr, dass bei einem zu engen Randspalt Blasen, die an der Schmelzenbehälterwand anhaften, abgeschert werden und ins Produkt gelangen. Um diese Probleme zu lösen, wird in der DE 10 2006 060 972 A1 vorgeschlagen, die Vorrichtung so auszulegen, dass ein durch die axiale Förderwirkung bewirkter Schmelzenstrom den Spalt zwischen Wandbereich und Rührerflügeln gegen ein unmittelbares Durchströmen der Glasschmelze abdichtet. Dadurch ergibt sich eine dynamische Abdichtung des Spaltes, der folglich eine größere Spaltbreite aufweisen kann. Um die dynamische Abdichtung zu erreichen, werden beispielsweise der Anstellwinkel, die geometrische Form und/oder die helixartige Anordnung der Rührerflügel optimiert.

Der Einsatz der bekannten Vorrichtungen zum Homogenisieren einer Glasschmelze hat gezeigt, dass dennoch in einem erheblichen Umfang Blasenbildungen in der Glasschmelze auftreten können. Außerdem weisen die bekannten Konstruktionen Rührerflügel bzw. Rührerelemente mit größeren Abmessungen auf, wodurch für deren Beschichtung eine relativ große Menge an Beschichtungsmaterial benötigt wird, das üblicherweise einer speziellen Edelmetall-Legierung entspricht. Demnach ist die Realisierung der bekannten Konstruktionen recht kostenintensiv. Es besteht daher der Bedarf, die bekannten Vorrichtungen weiter zu verbessern.

Aufgabe der vorliegenden Erfindung ist es daher, eine Vorrichtung zum Homogenisieren einer Glasschmelze bereitzustellen, mit der ein hoher Homogenisierungsgrad erreicht und zugleich eine Kostenreduktion erzielt werden kann. Zudem soll auch die Bildung von Gasblasen effektiv unterbunden werden können.

Diese Aufgabe wird gelöst durch eine Vorrichtung mit den Merkmalen des Anspruchs 1 sowie durch deren Verwendung gemäß dem nebengeordneten Anspruch.

Demnach wird eine Vorrichtung zum Homogenisieren einer Glasschmelze mit mindestens einer Rührvorrichtung vorgeschlagen, bei der eine Vielzahl von Rührerflügeln an einer Rührwelle und beabstandet zueinander angeordnet sind, wobei zumindest die meisten der Vielzahl von Rührerflügeln als paddelförmige Elemente ausgebildet sind, die jeweils eine stirnseitige die Glasschmelze verdrängende Paddelfläche und eine rückseitige Paddelfläche aufweisen, und dass an jeweils einer der Paddelflächen mindestens ein Einbauelement angeordnet ist, das sich von der Paddelfläche zu der Rührwelle hin erstreckt. Die vorgeschlagene Konstruktion zeichnet sich dadurch aus, dass das mindestens eine Einbauelement jeweils an der rückseitigen Paddelfläche angeordnet ist und eine Kante aufweist, die sich von der Rührerwelle in radialer Richtung entlang der Paddelfäche mit einer Kantenlänge erstreckt, die um einen vorgebbaren Abstand geringer als die in radialer Richtung sich erstreckende Länge der Paddelfläche ist. Demnach ragt das Einbauelement nicht bis an die äußere Kante bzw. den Rand des Rührerflügels heran, sondern es bleibt ein vorgebbarer Abstand bestehen. Die Einbauten werden somit in Drehrichtung vollständig von dem Rührerflügel verdeckt. Dies führt zu einer weiteren Verringerung der Reboilneigung.

Die Erfindung geht von der Erkenntnis aus, dass paddelförmige Rührerflügel sehr schmal und somit materialsparend ausgebildet werden können, wenn an ihnen Einbauelemente angeordnet sind, die sich von der jeweiligen Paddelfäche zu der Rührwelle hin erstrecken und somit den jeweiligen Rührerflügel stützen und stabilisieren. Dabei ragt das Einbauelement nicht bis an die äußere Kante bzw. den Rand des Rührerflügels heran, sondern es bleibt ein vorgebbarer Abstand bestehen. Zudem wurde im Wege von praktischen Untersuchungen zum Einsatz einer solchen Konstruktion festgestellt, dass die Einbauelemente auch signifikant die Blasenbildung reduzieren, insbesondere wenn die Einbauelemente sich im Wesentlichen parallel zur Umlaufrichtung der Rührwelle erstrecken. Demnach wurde erkannt, dass Einbauelemente, die eigentlich der Abstützung der Rührerflügel dienen sollen, auch das genannte Problem der Gasblasenbildung effektiv lösen können. Hierzu befinden sich die Einbauelemente hinter den Rührerflügeln, d.h. dass das jeweilige Einbauelement an der rückseitigen Paddelfläche angeordnet ist. Mit anderen Worten: Es werden an der nicht-angeströmten Paddelfläche der Rührerflügel, also auf der Rückseite bzw. Lee-Seite, Einbauelemente vorgesehen. Dadurch wird der auf der Rückseite des Rührerflügels entstehende Unterdruck, der besonderes relevant für die Blasenbildung ist, gemildert bzw. es wird vermieden, dass hohe Gradienten in der Druckverteilung auftreten.

Aufgrund des besagten Abstand, d.h. des Unterschiedes zwischen der Kantenlänge des Einbauelements und der Länge des Rührerflügels, wird das Einbauelement vollkommen von dem Rührerflügel verdeckt, wobei der Rührerflügelrand unbeeinflusst von dem mindestens einen Einbauelement bleibt. Die eigentliche Wirkung des Rührerflügels wird nicht vermindert wird. Vielmehr konnte festgestellt werden, dass das mindestens eine Einbauelement das Auftreten von Reboilvorgängen und eine daraus folgende Blasenbildung deutlich verringert. Dasselbe gilt für die Verbesserung der Homogenisierungswirkung. Es hat sich als vorteilhaft erwiesen, wenn der Abstand in Abhängigkeit von der Größe des Spaltes zwischen Rührerflügel und Innenwand des Rührgefäßes so vorgegeben wird, dass der Abstand etwa das 0,5-fache bis 2-fache der Spaltgröße aufweist. Die erfindungsgemäßen Einbauelemente bzw. Einbauten, die an der drehrichtungsabgewandten Seite (rückseitigen Paddelfläche) angeordnet sind, hewirken also eine deutliche Verringerung des Risikos von Blasenbildung, insbesondere durch Reboilvorgänge. Zudem tragen die Einbauelemente zur Stabilisierung der Rührerflügel bei.

Experimente konnten belegen, dass das durchschnittliche Aufkommen von Blasenfehlern signifikant um ca. 20 Prozent verringert werden kann. Darüber hinaus hat sich beim Betrieb des Rührers gezeigt, dass bei höheren Umdrehungszahlen (einsetzend ab ca. 50 bis 60 U/min) die Anzahl sog. Knoten deutlich verringert; optimal sind Drehzahlen von 80 bis 100 U/min. Knoten sind lokale Bereiche in der Glasschmelze (ähnlich wie Schlieren mit andersartiger chemischer Zusammensetzung), die eine deutlich höhere Viskosität aufweisen und sich besonders schlecht homogenisieren lassen.

Die paddelförmigen Flügel können gebogen sein, insbesondere kann die die stirnseitige Paddelfläche konvex geformt sein, um eine höhere Eigenstabilität zu erzielen. Dabei können ein oder auch mehrere Einbauelemente an jedem Rührerflügel vorgesehen sein, die eine zusätzliche Stabilisierung bzw. Abstützung und gleichzeitig auch einen die Blasenbildung reduzierenden Effekt bewirken. Beispielsweise kann an dem jeweiligen Rührerflügel nur ein einzelnes Einbauelement, z.B. in Form eines plattenförmigen Elementes, vorgesehen sein. Auch kann an einem Rührerflügel eine Gruppe von mehreren parallel angeordneten Elementen (z.B. stabförmig) vorgesehen sein. Auch kann das mindestens eine Einbauelement eine im Wesentlichen dreieckige Form aufweisen. Die Einbauten können also pro Flügel aus einem oder mehreren Körpern bestehen, die z.B. als Platten, Zylinder oder Stäbe ausgebildet sind. Sie dienen sowohl zum Abbau von Blasenbildung, insbesondere von kavitationsbedingter Reboil-, Senkundär- und/oder Neu-Blasenbildung, dienen aber auch als mechanische Stütze zur Ableitung der auf die Flügel ausgeübten Kippmomente.

Bevorzugt sind die paddelförmigen Rührerflügel entlang der Rührerwelle in mehreren Stufen oder Ebenen angeordnet, wobei jede Ebene mindestens zwei Rührerflügel, vorzugsweise drei, aufweist, und wobei zwischen den Ebenen jeweils Zwischenräume vorgesehen sind. Dadurch wird ein mehrstufiger Rührer realisiert, der keine ineinander verschachtelte bzw. sich überlappenden Rührerflügel-Ebenen aufweist, sondern ausreichend Zwischenräume frei lässt, in denen die Glasschmelze nicht von einem Rührerflügel erfasst wird. Dadurch wird bewusst ein kompakte Anordnung bzw. Verschachtelung der Rührerflügel-Ebenen vermieden, welche dazu führen würde, dass sich der gesamte Inhalt des Rührers, also die ganze Masse der zu rührenden Glasschmelze, quasi als ein zylinderförmiger, zusammenhängender Massenblock (Glasstrang) dreht, was den gewünschten Rühreffekt stark vermindern würde. Vorzugsweise ist ein Zwischenraum so dimensioniert, dass seine senkrecht zur Rotationsachse des Rührers projizierte Fläche mindestens 5 Prozent und höchstens 90 Prozent derjenigen Fläche entspricht, die sich durch eine senkrecht zur Rotationsachse des Rührers projizierte Flächenabbildung der Rührerflügel (einer Ebene) ergibt. Dadurch wird das Homogenisierungsergebnis weiter verbessert. Insgesamt ergibt sich also eine Anordnung von Rührerflügeln, die sehr deutlich durch Zwischenräume aufgelockert ist, wobei die Rührerflügel selbst sehr schlank ausgestaltet sein können. Bevorzugt werden jeweils drei Rührerflügel pro Ebene angeordnet, wobei von Ebene zu Ebene die Rührerflügel einen anderen Anstellwinkel aufweisen können. Auch kann die Verteilung der Rührerflügel (120-Grad-Sternschema) von einer zur nächsten Ebene versetzt sein (Verschiebung um einen Azimuthwinkel von 60 Grad). Auch diese Maßnahme erhöht deutlich die Homogenisierungswirkung des Rührers.

Diese und weitere vorteilhafte Ausführungsformen sind auch Gegenstand der rückbezogenen Unteransprüche.

Demnach ist es vorteilhaft, wenn der vorgebbare Abstand, um den die Kantenlänge des Einbauelementes kürzer ist als die Länge des Rührerflügels, zwischen 10 bis 50 Prozent, insbesondere 20 bis 30 Prozent, der Länge der Paddelfläche beträgt.

Auch ist es vorteilhaft, wenn zwischen dem jeweiligen Flügelende und der angrenzenden Wandung des Rührgefäßes ein Spalt verbleibt, dessen Länge vorzugsweise 4,5 bis 10,5 Prozent des Durchmessers beträgt, den der Rührer aufweist. In Bezug auf diesen Spalt sollte der besagte Abstand bevorzugt so eingestellt werden, dass er dem 0,5 bis 2-fachem der Größe des Spaltes entspricht.

Außerdem werden die Rührerflügel so dimensioniert, dass der Durchmesser des von den drehenden Rührerflügeln beschriebenen Kreises nicht weniger als das 1,5-fache und nicht mehr als das 5-fache des Durchmessers der Rührerwelle entspricht.

Das insbesondere plattenförmige Einbauelement kann eine Kante aufweisen, die sich von der Rührerwelle in radialer Richtung entlang der Paddelfläche mit einer Kantenlänge erstreckt, die um einen vorgebbaren Abstand geringer ist als die in radialer Richtung sich erstreckende Länge der Paddelfläche ist.
Von Vorteil ist es, wenn die Rührerflügel bzw. die stirnseitige Paddelfläche eine gewölbte Form, insbesondere eine in Umlaufrichtung konvex gewölbte Form, aufweist. Die vorzugsweise hinter den Rührflügeln platzierten Einbauten stehen dann auf der rückseitigen (konkaven) Paddelfläche und sind beispielsweise senkrecht zur Sehne der konkaven Paddelfläche ausgerichtet. Es ist aber auch möglich, die Einbauten in anderen Lagen bzw. Positionen anzubringen.

Die Vorrichtung ist vorzugsweise mehrstufig gestaltet, d.h. dass die Rührerflügel in axialer Richtung entlang der Rührerwelle in mehreren Stufen bzw. Ebenen angeordnet sind, wobei zumindest auf der ersten oder letzten Stufe reduzierte Rührerflügel angeordnet sind, die eine geringere Flächenausdehnung als die in den übrigen Stufen angeordneten Rührerflügel aufweisen. Demnach ist die Wirkfläche der Rührerflügel nicht an allen Stellen dieselbe, sondern ist insbesondere am Anfang der Rührwelle (im oberen Bereich) und/oder am Ende (im unteren Bereich) reduziert. Dies wird z.B. durch Verkürzen der Flügelhöhe und/oder Flügelbreite erreicht. Ein Verkürzen der Flügel, z.B. im Zuflussbereich der Glasschmelze, verbessert die Homogenisierung zusätzlich.

Auch kann die Anstellung bzw. Schrägstellung der Rührerflügel verschieden sein. Vorzugsweise befinden sich zumindest in den ersten zwei Stufen (im oberen Bereich) die Rührerflügel in einer ersten (positiven) Schrägstellung, wodurch die Glasschmelze zum Auslass hin befördert wird. Hingegen sind die Rührerflügel der zumindest zwei letzten Stufen (im unteren Bereich) in einer dazu umgekehrten (negativen) Schrägstellung angeordnet. Der Rührer kann mehr-zählig bzw. N-zählig ausgebildet sein, d.h. mit N Flügeln pro Ebene versehen sein. Vorzugsweise ist der Rührer drei-zählig ausgebildet.

Wie oben erwähnt, kann die Vorrichtung vorzugsweise so ausgestaltet werden, dass die Rührvorrichtung einen Spalt vorgebbarer Breite zwischen den äußeren Flügelenden, insbesondere Flügelkanten, der Rührerflügel und der Innenwandung des Rührgefäß aufweist.

Nachfolgend wird die Erfindung in beispielhafter Weise und unter Bezugnahme auf die beigefügten Zeichnungen ausführlicher beschrieben werden, woraus sich weitere Merkmale, Vorteile und zu lösende Aufgaben ergeben werden. Es zeigen:
- Fig. 1: in einer schematischen Ansicht eine Rührvorrichtung gemäß einer ersten Ausführungsform der Erfindung;
- Fig. 2: die Einbausituation der Rührvorrichtung in einer erfindungsgemäßen Vorrichtung;
- Fig. 3a: in einer Teilansicht die Rührvorrichtung mit Rührwelle und daran angeordneten Rührerflügeln;
- Fig. 3b: eine zur Fig. 3a passende Darstellung der von den Rührerflügeln abgedeckten Projektionsflächen und der von den Zwischenräumen freigehaltenen Projektionsflächen;
- Fig. 3c: eine zur Fig. 3a passende Darstellung der azimuthalen Verteilung von Rührerflügeln;
- Fig. 4a: in vergrößerter Detailansicht die Anordnung eines Einbauelementes an einem Rührerflügel;
- Fig. 4b: in einer zur Fig. 4a passenden Queransicht die Anordnung und Dimensionierung des Einbauelementes;
- Fig. 5: eine alternative Ausführungsform von Einbauelementen; und
- Fig. 6: eine weitere alternative Ausführungsform von Einbauelementen.

In den Figuren sind identische oder im Wesentlichen gleichwirkende Elemente oder Elementgruppen mit identischen Bezugszeichen versehen.

Die Fig. 1 zeigt den Aufbau einer erfindungsgemäßen Rührvorrichtung, im Weiteren auch kurz Rührer genannt, zum Einbau in eine Vorrichtung zum Homogenisieren einer Glasschmelze. Der Rührer weist eine Rührwelle 10 auf, dessen oberes Ende von einem Motor (nicht dargestellt) angetrieben wird, um die Rührwelle 10 in Umlaufrichtung rotieren zu lassen. Beispielsweise liegt der bestimmungsgemäße Drehzahlbereich der Rühreinrichtung zwischen etwa 10 U/min und 100 U/min. Am unteren Ende des Rührers sind auf mehrere Ebenen bzw. Stufen verteilt paddelförmige Rührerflügel (im Weiteren auch kurz Paddel genannt) angeordnet. Die Paddel können sehr schmal und materialsparend geformt sein; auch können sie verschiedene Größen aufweisen. Die oberste Ebene hat Rührerflügel 11' mit einer etwas verringerten Flächengröße, die unterste Reihe hat ebenfalls Rührerflügel 11" mit einer verringerten Flächengröße, wobei die unteren Kanten dieser Flügel 11" abgeschrägt sind, um sich dem Auslassbereich eines Rührgefäßes (s. Fig. 2) anzupassen. In den mittleren Ebenen befinden sich Rührerflügel 11, die eine nicht-reduzierte Flächengröße haben und soweit an den Innenrand des Rührgefäßes reichen, dass ein vorgebbarer Spalt bestehen bleibt. Durch die Ausgestaltung der Flügelform, - anordnung, -winkelstellung usw. kann der Schmelzenstrom so beeinflusst werden, dass der Spalt gegen ein unmittelbares Durchströmen der Glasschmelze dynamisch abgedichtet ist.

Wie bereits anhand der Fig. 1 zu erkennen ist, sind die paddelförmigen Rührerflügel gewölbt geformt und weisen an einer ihrer Flächen je ein Einbauelement auf. Die Flügel bzw. Paddel können am Schaft bzw. der Welle 10 des Rührers verschweißt werden. Alternativ oder zusätzlich dazu können die Flügel bzw. Paddel in Schafthülsen befestigt werden, durch den Schaft gesteckt und/oder in einer Innenverankerung befestigt werden. Dabei kann die Schafthülse auf den Schaft bzw. die Rührerwelle 10 aufgeschrumpft und/oder gestiftet bzw. passgenau befestigt werden.

Die Fig. 2 zeigt die Einbausituation der Rührvorrichtung in einer Vorrichtung 1, die ein Rührgefäß 2 aufweist, das beispielsweise eine zylindrische Form hat. In dem Rührgefäß 2 ist eine Glasschmelze 3 aufgenommen. Das Rührgefäß 2 kann kontinuierlich oder diskontinuierlich von der Glasschmelze 3 durchströmt werden, und zwar von dem Einlass 4 und hin zu dem Auslass 5. Bevorzugt wird das Rührgefäß 2 entlang der Schwerkraft verlaufend angeordnet, so dass der Einlass 4 sich im oberen Bereich des Rührers befindet. Die in Strömungsrichtung betrachtet vorderen Rührerflügel 11" befinden sich im Bereich des Einlasses 4 und bedecken einen Teil (0-50%) des Querschnitts des Einlasses 4. In dem hier gezeigten Beispiel wird der Einlass, der einen Durchmesser von 120 mm aufweist, auf einer Länge von 77,5 mm bedeckt.

Der Auslass 5 befindet sich im unteren Bereich des Rührers und damit am unteren Ende des Rührgefäßes 2, das mit einem sich konisch verjüngenden Abschnitt 2A ausgebildet ist. Die Gesamt-Förderwirkung des Rührers 10 wird nicht bloß durch die Schwerkraft, sondern im Wesentlichen durch die Drehgeschwindigkeit des Rührers und insbesondere durch die Anordnung und Gestaltung der daran befestigten Rührerflügel bestimmt. Zur Vereinfachung der Beschreibung wird hier exemplarisch für alle Rührerflügel auf die mittleren Rührerflügel 11 Bezug genommen.

Die in Fig. 2 gezeigten Rührerflügel 11 sind konvex ausgeformt, d.h. sie haben eine Vorwölbung bzw. einen Bauch, der in die Umlaufrichtung U des sich drehenden Rührers 10 zeigt. Dabei sind die Flügel bzw. Paddel 11 schräg angeordnet. Die Flügel 11 erstrecken sich in radialer Richtung nur soweit, dass zwischen dem äußeren Flügelrand und der Innenwandung des Rührgefäßes 2 ein gewünschter Spalt SP (Randspalt bzw. Abstand) verbleibt. Durch die Spaltgröße sowie die geometrische Form der Rührerflügel 11 und durch deren Anstellwinkel bzw. Winkelstellungen können die Strömungsverhältnisse in dem Rührgefäß 2 präzise eingestellt werden. Die Konstruktion ist so optimiert, dass auch bei variierender Drehzahl des Rührers (zwischen etwa 10 U/min bis 100 U/min) der Durchsatz bzw. Gesamtschmelzenfluss durch das Rührgefäß 2 nur in geringem Ausmaße variiert, beispielsweise bis maximal +/- 5%, bevorzugter bis maximal +/- 1%, bezogen auf den Gesamtdurchsatz bzw. Gesamtschmelzenfluss durch das Rührgefäß 2.

Die Rührerflügel 11 sind jeweils mit einem Einbauelement 11E versehen, das z.B. plattenförmig ausgestaltet ist und sich im Wesentlichen parallel zur Umlaufrichtung U erstreckt. Die Einbauelemente 11E können senkrecht zur Rotationsachse orientiert sein, wodurch sie somit selbst keine signifikante Förderwirkung auf die Glasschmelze haben. Es hat sich gezeigt, dass eine um max. +/- 45 Grad veränderte Orientierung Einbauelemente 11E tolerierbar ist. In dem hier gezeigten Beispiel befindet sich das jeweilige Einbauelement 11E auf der Rückseite bzw. hinteren Fläche des Flügels bzw. Paddels 11, d.h. an derjenigen Fläche, die nicht in Umlaufrichtung U zeigt, sondern sich auf der nicht-angeströmten Seite befindet. Die Einbauelemente 11 sind beispielsweise als dreieckförmige Platten ausgebildet, deren Seitenflächen rechtwinklig zur Achse der Rührwelle 10 ausgerichtet sind. Jedes Einbauelement 11E erstreckt sich in radialer Richtung auf der rückseitigen Fläche des Flügels 11, ragt aber nicht an den äußeren Rand des Flügels 11 heran, so dass ein Abstand X verbleibt (siehe auch Fig. 3a).

Die Fig. 3a zeigt den unteren Bereich des Rührers 10 mit den daran angeordneten Rührerflügeln bzw. Paddeln, welche in mehreren, hier fünf, Ebenen bzw. Stufen E1 bis E5 übereinander angeordnet sind. Die Flügel 11' der ersten bzw. obersten Ebene E1 sowie die Flügel 11" der letzten bzw. untersten Ebene E5 haben im Vergleich zu den anderen Flügeln 11 eine reduzierte Größe. Zudem haben die unteren Flügel 11" an ihren unteren Kanten einen Einschnitt 11C, um sich an die konische Form des Rührgefäßes anzupassen (s. auch Fig. 2). Die Flügel der drei oberen Ebenen E1, E2 und E3 befinden sich in einer ersten Winkelstellung, so dass bei Rotation des Rührers 10 die Glasschmelze von diesen Flügeln nach unten zum Auslass hin befördert wird. Die Flügel der zwei unteren Ebenen E4 und E5 befinden sich in einer zweiten umgekehrten Winkelstellung, so dass bei Rotation des Rührers 10 die Glasschmelze von diesen Flügeln nach oben hin befördert wird bzw. der nach unten gerichtete Schmelzfluss abgebremst wird.

Zwischen den Ebenen sind jeweils Freiräume bzw. flügellose Zwischenräume ZR vorgesehen, deren Funktion noch nachfolgend anhand der Fig. 3b näher beschrieben wird.

Das untere Ende des Rührers 10 kann mit einem Abschlusselement versehen werden, z.B. mit einer Kappe, deren Radius vorzugsweise größer als das Zweifache des Schaftradius ist, hier beispielsweise das Drei- bis Fünffache des Schaftradius ist. Die Rührerflügel bzw. Paddel selbst sind vorzugsweise senkrecht zu ihrer Dicke nach allen Seiten hin am Ende bzw. Rand abgerundet. Die Rührvorrichtung kann so gestaltet sein, dass der Glaseinlauf (s. IN in Fig. 2) seitlich erfolgt, der Glasauslauf (s. OUT in Fig. 2) im unteren Bereich zentrisch oder auch exzentrisch unterhalb der untersten Flügelebene sitzt. Das Rührteil bzw. Rührgefäß selbst kann polygonal oder zylindrich sein und auch einen Konus im unteren Bereich aufweisen.

Fig. 3b veranschaulicht die mit vielen Freiräumen versehene Bauweise des Rührers anhand einer Darstellung der von den Rührerflügeln abgedeckten Projektionsflächen F und von Projektionsflächen Z der dazwischen liegenden Freiräume bzw. Zwischenräume (siehe auch ZR in Fig. 3a). Die Fläche F gibt somit diejenige Fläche an, welche sich durch eine senkrecht zur Rotationsachse orientierte Projektion einer der mittleren Rührerflügel-Ebenen (siehe E2 - E4 in Fig. 3a) ergibt. Demnach repräsentiert die Fläche F im Wesentlichen die bei Rotation auf die Glasschmelze einwirkende effektive Rührfläche pro Ebene. Die Fläche F' oder F" entspricht der Projektionen der Ebene E1 bzw. E5. Zwischen den Ebenen sind Zwischenräume freigehalten (siehe auch ZR Fig. 3a), in denen keine Einwirkung durch Rührflügel (Verdrängung bzw. Umwälzung) der Glasschmelze auftritt. Die Flächen Z entsprechen demnach Freiflächen bzw. Projektionen der vorgesehenen Freiräume, in denen die Glasschmelze nicht unmittelbar durch Rührerflügel oder sonstige in Umlaufrichtung sich bewegende Elemente verdrängt oder bewegt wird. Diese quasi aufgelockerte Bauweise verhindert es, dass die sich im Rührgefäß befindliche Glasschmelze als Ganzes mit dem rotierenden Rührer mit dreht und somit eine stufenweise Umwälzung der Glasschmelze erschwert wird. Deshalb kann hier eine sehr hohe Durchmengung und Homogenisierung der Glasschmelze erreicht werden. Durch das Verhältnis Z : F wird quasi das Verhältnis der freigehaltenen Rührerzonen zu den effektiven Rührerzonen angeben. Es hat sich gezeigt, dass Z nicht kleiner als 5 Prozent und nicht mehr als 90 Prozent von F betragen sollte, um einen hohen Homogenisierungseffekt zu erzielen.

Fig. 3c zeigt passend zu den Darstellung nach den Fig. 3a und 3b eine Querschnittsansicht senkrecht zur Rotationsachse und veranschaulicht die azimuthale Anordnung und Verteilung von Rührerflügeln sowie die Dimensionierung derselben in Bezug auf die Durchmesser der Rührerwelle und/oder des Rührgefäßes. Der Rührer ist hier beispielsweise drei-reihig ausgebildet, indem in jeder Ebene (siehe auch E1 - E5 in Fig. 3a) jeweils drei Flügel bzw. Paddel 11 symmetrisch in Sternform angeordnet sind. Somit ergibt sich zwischen zwei benachbarten Paddeln ein Winkel (Azimuth) von 120 Grad. Die Anordnung der Paddel ändert sich von einer Ebene zur nächsten, indem diese jeweils um 60 Grad verdreht bzw. versetzt wird. Außerdem kann sich auch die Anstellung (Winkel bezüglich Umlaufrichtung) der Paddel von Ebene zu Ebene ändern. Vorzugsweise haben die oberen Flügel bzw. Paddel in den Ebenen E1 bis E3 einen positiven Anstellwinkel, d.h. eine Orientierung die eine Verdrängung der Glasschmelze nach unten zum Auslauf hin bewirkt. Hingegen haben die unteren Flügel bzw. Paddel der Ebenen E4 und E5 eine negative Winkelstellung, die eine nach oben gerichtete Förderung der Glasschmelz bewirken will und somit die Förderung nach unten abbremst. Insgesamt wird hierdurch ein nahezu neutraler Massendurchsatz im Rührer eingestellt, so dass die Glasschmelze nur sehr langsam (quasi nur unter Einfluss der Schwerkraft) sich nach unten zum Auslass hin bewegt. Der Rührer kann dadurch so optimiert werden, dass weitestgehend Förderneutralität herrscht.

Die Fig. 3c veranschaulicht auch die Dimensionierung des Rührers. Es hat sich gezeigt, dass der Durchmesser D1 der Rührerwelle 10 im Verhältnis zum Durchmesser D2 des Rührgefäßes 2 vorzugsweise folgender Dimensionierungsregel entsprechen sollte: D1 sollte etwa 25 bis 50 Prozent von D2 betragen. Desweiteren sollte gelten: D1 = [0,25 bis 0,6] × D3, wobei D3 der Durchmesser der normalen Rührerflügel-Ebene (siehe z.B. E3 in Fig. 3a) ist. Demnach sollte ein Randspalt SP zwischen Flügelenden und Innenwandung des Rührgefäßes 2 wie folgt verbleiben: SP = [4,5 bis 10,5] D2 / 100, also sollte der Randspalt etwa 4,5 bis 10,5 Prozent des Durchmessers D2 betragen.

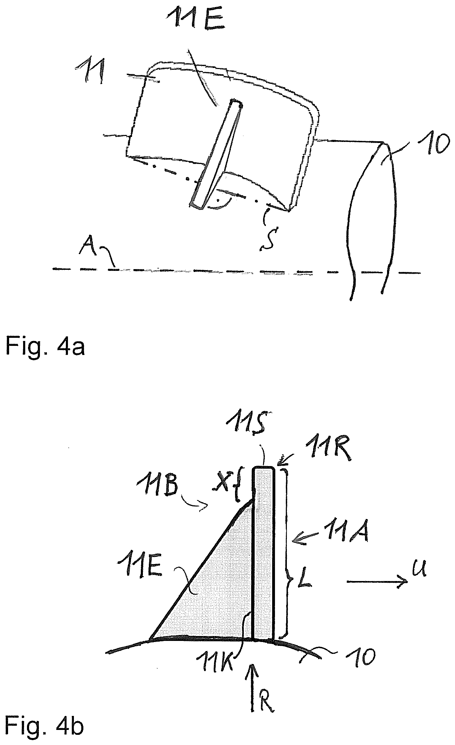

Die Figuren 4a und 4b veranschaulichen im Detail die Ausgestaltung eines paddelförmigen Rührerflügels 11 und eines daran angeordnetem Einbauelements 11E. Der Fügel 11 ist gewölbt geformt und hat eine konvexe erste Fläche 11A (Stirnseite des Paddels), die in die Umlaufrichtung U des sich drehenden Rührers zeigt, und eine zweite konkave Fläche 11B (Rückseite des Paddels), die in die Gegenrichtung zeigt. Somit wird bei Rotation des Rührers die Fläche 11A von der Glasschmelze angeströmt (s. auch Fig. 2). An der zweiten nicht-angeströmten Fläche 11B ist ein Einbauelement 11E vorgesehen, das einem im Wesentlichen dreieckigen Plättchen entspricht und so ausgerichtet ist, dass die Seitenflächen des Plättchens senkrecht zur Sehne S der gewölbten Fläche orientiert sind. Dadurch wird die Orientierung des Einbauelementes 11E der Orientierung des Flügels 11 angepasst. Außerdem wird sichergestellt, dass alle Einbauelemente (siehe auch Fig. 6) vollkommen von dem Flügel abgedeckt sind und somit die Flügelwirkung nicht vermindern. Die Einbauelemente erstecken sich senkrecht von der Drehachse der Rührers 10, d.h. sie erstrecken sich also in radialer Richtung R (s. Fig. 4b), wodurch sich das Plättchen neutral zur Drehrichtung des Rührers 10 verhält. Das Einbauelement 11E bzw. Plättchen hat eine Kante 11K, die in radialer Richtung R entlang der rückseitigen Fläche 11B verläuft, und zwar soweit, dass sie nicht an den Randbereich 11C des Flügels 11 heran ragt, sondern ein Mindestabstand X verbleibt. Der Abstand X beträgt etwa das 0,5-fache bis 2-fache des Randspaltes SP (s. Fig. 3c). Außerdem sollte der Abstand X etwa 10-50 Prozent, vorzugsweise 20-30 Prozent, der Länge L des Plättchens betragen (s. Fig. 4b). Durch diese Dimensionierung werden die hydraulischen Verhältnisse deutlich verbessert und die Blasenbildung reduziert.

Wie insbesondere die Fig. 4b zeigt, ist der Flügel bzw. das Paddel 11 sehr flach ausgestaltet und hat eine Dicke von wenigen Millimetern. Außerdem weisen die Randflächen des Paddels 11 abgerundete Kanten 11R auf. Das gilt für alle Kanten des Paddels und der Einbauelemente. Dadurch wird vermieden, dass sich Moussierpunkte bzw. Kavitationskeime ausbilden, die zu einer Blasenbildung führen können. Insbesondere die der Innenwandung des Rührergefäßes zugewandte Randfläche 11S ist möglichst klein dimensioniert, so dass sie nur eine sehr geringe Stirnfläche für evtl. in der Glasschmelze auftretende elektrische Stromdichten bietet. Das ist vorteilhaft bei solchen Rührern, die mittels Bestromung des Rührergefäßes beheizt werden und bei denen Kriechströme auftreten können, die über die Glasschmelze und eben diese Stirnflächen 11S zu- bzw. abfließen. Es hat sich gezeigt, dass insbesondere bei einer Beheizung mit niederfrequenten Wechselströmen von z.B. 50 Hz bis einigen kHz, solche Kriechströme (Nebenschluss-Effekt) auftreten und die Bildung von Gasblasen verursachen können. Durch eine möglichst kleinflächige Stirnseite 11S wird dieses Phänomen effektiv unterbunden.

Wie oben beschrieben wurde, schlägt die Erfindung eine Vorrichtung zum Homogenisieren einer Glasschmelze vor, bei der zumindest die meisten der Rührerflügel, also mehr als 50 Prozent, als paddelförmige Elemente bzw. Paddel 11 ausgebildet sind. Jedes Paddel weist eine stirnseitige die Glasschmelze 3 verdrängende Paddelfläche 11A und eine rückseitige Paddelfläche 11b auf, wobei zumindest an einer dieser Paddelflächen, vorzugsweise an der rückseitigen Paddelfläche 11B, mindestens ein Einbauelement 11E angeordnet ist, welches von dieser Paddelfäche 11B sich zu der Rührwelle 10 hin erstreckt (siehe z.B. Fig. 3a).

Vorzugsweise sind die paddelförmigen Rührerflügel 11 in axialer Richtung A entlang der Rührerwelle 10 in mehreren Ebenen E1, E2, ... , E5 angeordnet, wobei zwischen zwei benachbarten Ebenen ein Zwischenraum ZR freigehalten ist, in welchen keiner der Rührerflügel 11 hineinragt (siehe Fig. 3a und 3b). Die Ebenen E1, E2, ... , E5 sind bevorzugt in axialer Richtung äquidistant zueinander angeordnet. Die Zwischenräume ZR sind so dimensioniert, dass jeder Zwischenraum ZR eine senkrecht zur Rotationsachse A projizierte Fläche Z abdeckt, die mindestens 5 Prozent und höchstens 90 Prozent derjenigen projizierten Fläche F entspricht, die die Rührerflügel 11 einer Ebene (z.B. Ebene E3) und der zugehörige Teilbereich der Rührerwelle 10 abdecken (s. Fig. 3b).

Die Vorrichtung ist so ausgebildet, dass in jeder Ebene E1 bis E5 vorzugsweise drei Rührerflügel 11 angeordnet sind, vorzugsweise radial-symmetrisch angeordnet sind. Dabei kann die Anordnung in den verschiedenen Ebenen so ausgestaltet sein, dass die Rührerflügel 11 in einer Ebene (z.B. E3) bezogen auf die Rührerflügel der benachbarten Ebene (z.B. E4) azimuthal versetzt angeordnet sind, insbesondere radial-symmetrisch und azimuthal versetzt angeordnet sind (siehe Fig. 3c).

Die Rührvorrichtung weist einen Spalt SP zwischen den äußeren Flügelenden bzw. Flügelkanten 11S der Rührerflügel und der Innenwandung des Rührgefäßes auf. Der Spalt bzw. Randspalt SP hat beispielsweise eine Größe, die mindestens 4,5 Prozent und höchstens 10,5 Prozent des Durchmessers D2 des Rührgefäßes 2 entspricht (siehe Fig. 3c).

Wie in Fig. 4a und 4b dargestellt ist, sind die äußeren Flügelenden bzw. Flügelkanten der Rührerflügel 11, wie z.B. die Kanten der Stirnseite 11S, als abgerundete Randbereiche 11R ausgebildet. Die paddelförmigen Rührerflügel 11 sind als flache Elemente ausgebildet, wobei die Randbereiche eine geringe Dicke aufweisen. Insbesondere der Randbereich 11S (Stirnseite) hat eine Dicke von maximal 5 mm. Die schlanken Paddel 11 bzw. Flügel ermöglichen dank der Wölbung und/oder der Einbauelemente eine stabile Konstruktion, die wenig Material, insbesondere wenig Edelmetall (zur Beschichtung der Flügel), benötigt. Außerdem können die schmalen Flügel es verhindern, dass bei einem strombeheizten Rührer störende Kriechströme auftreten, die von der Innenwandung ausgehend und durch die Glasschmelze hindurch auf die Flügelenden fließen und dann im Nebenschluss durch die Rührerwelle abfließen. Diese Kriechströme würden eine Blasenbildung verursachen, insbesondere dann, wenn mit einen Wechselstrom beheizt wird, der eine relativ niedrige Frequenz unterhalb von einigen Kilohertz aufweist und z.B. 50 Hz beträgt.

Was die Dimensionierung der Rührerwelle betrifft, so hat diese einen Durchmesser D1, der mindestens 25 Prozent und höchstens 50 Prozent des Durchmessers D2 des Rührgefäßes 2 entspricht (siehe Fig. 3c). Die Rührerwelle kann auch hohl ausgebildet sein und ggf. begast werden. Außerdem kann die Rührerwelle aus einem anderen Material bzw. aus einer anderen Legierung gefertigt sein als die Flügel.

Die hier beschriebene Rührvorrichtung kann beispielsweise unmittelbar vor einem Glasspeiser befinden (nicht dargestellt), aus dem die austretende Glasschmelze auf den Außenumfang einer sich drehenden Dannerpfeife austritt, um dort einen geschlossenen Glasschmelzenmantel auszubilden, der nach Abziehen zu einem Glasrohr mit im Wesentlichen konstantem Außendurchmesser und konstanter Wandstärke führt. Der Glasspeiser ist unmittelbar hinter dem Auslass 5 der Rührvorrichtung (s. Fig. 2) angeordnet, das heißt ohne Zwischenschaltung von puffernden Zwischenbehältnissen. Dies setzt einen sehr konstanten Durchsatz des Rührgefäßes 2 voraus, der erfindungsgemäß aufgrund des Anstellwinkels, der geometrischen Form und/oder der Winkelstellungen der Rührerflügel 11 in Umfangsrichtung der Rührerwelle 10 erzielt werden kann. Die Glasschmelze kann z.B. durch einen sich vertikal aufwärts erstreckenden Verbindungsschenkel in den Einlass 4 eintreten, so dass insgesamt auf das Rührgefäß 2 ein externer hydrostatischer Druck einwirkt, um die Glasschmelze zu dem Auslass 5 hin zu treiben. Wie dem Fachmann ohne weiteres ersichtlich sein wird, kann das der vorliegenden Erfindung zugrunde liegende Prinzip zum Homogenisieren einer Glasschmelze auch bei der Herstellung von Displayglas, insbesondere von Glasscheiben für LCD-, OLED- oder Plasma-Displays, zur Herstellung von Glaskeramiken, von Borosilikatgläsern, von optischen Gläsern oder von Gläsern im Rahmen der Herstellung von Rohrglas eingesetzt werden.

Die Fig. 5 zeigt eine alternative Ausgestaltung von Einbauelementen, nämlich derart, dass mehrere Einbauelemente an einem Rührerflügel 11 angebracht werden, hier z.B. je drei stabförmige Einbauelemente 11E' an einem Rührerflügel 11 angebracht sind. Die Fig. 6 zeigt eine weitere alternative Ausgestaltung von Einbauelementen, nämlich derart, dass ein rechteckiges, flaches Einbauelement 11E" an dem jeweiligen Rührerflügel 11 angebracht ist.

Die erfindungsgemäßen Einbauelemente bewirken insbesondere eine deutliche Verringerung von Reboilvorgänge und der damit einhergehenden Blasenbildung (ca. 20% weniger Blasenaufkommen). Zudem tragen die Einbauelemente auch zur mechanischen Stabilisierung der Rührerflügel bei. Die verschiedenen Rührerflügelebenen fördern abwärts bzw. aufwärts, so dass im Betrieb nahezu eine Durchsatz-Neutralität sich einstellt.

Zusammenfassend und Bezug nehmend auf die zuvor beschriebenen Figuren werden eine Vorrichtung zum Homogenisieren einer Glasschmelze und die Verwendung derselben vorgeschlagen. Dazu ist mindestens eine Rührvorrichtung vorgesehen, die eine in Umlaufrichtung U drehbare Rührwelle 10 und eine Vielzahl von Rührerflügeln 11, 11', 11" aufweist. Die Rührerflügel sind entlang der Rührwelle beabstandet zueinander angeordnet sind, um eine im Wesentlichen axial ausgerichtete Förderwirkung auf die Glasschmelze zu einem Auslass hin zu erzeugen. Zur Verbesserung der Homogenisierung bei gleichzeitiger Einsparung von Edelmetall-Material sind die Rührerflügel 11, 11', 11" paddelförmig ausgebildet und mit Einbauelementen 11E versehen. Diese bewirken auch eine deutliche Verminderung von Blasenbildung und werden vorzugsweise jeweils hinter der nicht-angeströmten Paddelfläche 11B angeordnet. Außerdem werden die Rührerflügel bzw. Paddel 11 in mehreren Ebenen E1-E5 angeordnet, zwischen denen freie Zwischenräume ZR vorgesehen sind.

### Bezugszeichenliste

- 1: Vorrichtung zum Homogenisieren einer Glasschmelze
- 2: Rührgefäß / Schmelzenbehälter
- 2A: sich konisch verjüngender Abschnitt (im unteren Bereich des Rührgefäßes)
- 3: Glasschmelze
- 4: Einlass (IN)
- 5: Auslass (OUT)

- 10: Rührerwelle
- A: axiale Richtung bzw. Rotationsachse
- R: radiale Richtung
- U: Umlaufrichtung der Rührerwelle

- 11: Rührerflügel, paddelförmig (Paddel)
- 11', 11": Rührerflügel in verminderten Größen

- E1-E5: Ebenen bzw. Stufen der angeordneten Rührerflügel
- ZR: Zwischenräume
- F, F', F": projizierte Flächen der Rührerflügel-Ebenen E1-E5
- Z: projizierte Flächen der freien Zwischenräume ZR

- +/-: erste (positiv befördernde) bzw. zweite (negativ befördernde) Schrägstellung der Rührerflügel

- 11A: vordere (angeströmte) Fläche des Rührerflügels
- 11B: hintere (nicht-angeströmte) Fläche des Rührerflügels
- 11C: gekürzter Randabschnitt an unteren Rührerflügeln
- 11S: äußerer Randbereich des Rührerflügels
- 11R: abgerundete Kantenbereiche
- 11E: Einbauelemente an den Rührerflügeln
- 11E*, 11E**: alternativ ausgestaltete Einbauelemente (Stäbchen bzw. Platte)
- 11K: eine Kantenlänge des Einbauelements (Verbindungsbereich zum Rührerflügel)
- X: Abstand zum Randbereich des Rührerflügels

- SP: Spalt / Randspalt (im Bereich der Innenwandung)

- D1: Durchmesser der Rührerwelle
- D2: Durchmesser des Rührgefäßes (Innen)
- D3, D3': Durchmesser der jeweiligen Rührerflügel-Ebene

## Patentansprüche

1. Vorrichtung zum Homogenisieren einer Glasschmelze (3) mit mindestens einer Rührvorrichtung (1), die in einem die Glasschmelze (3) aufnehmendes Rührgefäß (2) angeordnet ist, das einen Einlass (4) und einen Auslass (5) aufweist, wobei die Rührvorrichtung (1) eine in Umlaufrichtung (U) drehbare Rührwelle (10) und eine Vielzahl von Rührerflügeln (11) aufweist, die entlang der Rührwelle (10) beabstandet zueinander angeordnet sind, wobei zumindest die meisten der Vielzahl von Rührerflügeln, als paddelförmige Elemente (11) ausgebildet sind, die jeweils eine stirnseitige die Glasschmelze (3) verdrängende Paddelfläche (11A) und eine rückseitige Paddelfläche (11B) aufweisen, und dass an jeweils einer der Paddelflächen (11B) mindestens ein Einbauelement (11E) angeordnet ist, das sich von der Paddelfläche (11R) zu der Rührwelle (10) hin erstreckt,
**dadurch gekennzeichnet, dass** das mindestens eine Einbauelement (11E) jeweils an der rückseitigen Paddelfläche (11B) angeordnet ist und eine Kante (11K) aufweist, die sich von der Rührerwelle (10) in radialer Richtung (R) entlang der Paddelfläche (11B) mit einer Kantenlänge erstreckt, die um einen vorgebbaren Abstand (X) geringer als die in radialer Richtung (R) sich erstreckende Länge (L) der Paddelfläche (11B) ist.

2. Vorrichtung nach Anspruch 1, **dadurch gekennzeichnet, dass** der vorgebbare Abstand (X) 10 bis 50 Prozent, insbesondere 20 bis 30 Prozent, der Länge (L) der Paddelfläche beträgt.

3. vorrichtung nach Anspruch 1 oder 2, **dadurch gekennzeichnet, dass** die Rührvorrichtung (1) einen Spalt (SP) zwischen den äußeren Flügelenden, insbesondere Flügelkanten, der Rührerflügel (11) und der Innenwandung des Rührgefäßes (2) aufweist, insbesondere einen Spalt (SP), dessen Größe mindestens 4,5 Prozent und höchstens 10,5 Prozent des Durchmessers (D2) des Rührgefäßes (2) entspricht.

4. Vorrichtung nach Anspruch 3, **dadurch gekennzeichnet, dass** der vorgebbare Abstand (X) dem 0,5 bis 2-fachem der Größe des Spaltes (SP) entspricht.

5. Vorrichtung nach einem der vorhergehenden Ansprüche,
**dadurch gekennzeichnet, dass** die paddelförmigen Rührerflügel (11) in axialer Richtung (A) entlang der Rührerwelle (10) in mehreren Ebenen (E1, E2, ... , E5) angeordnet sind, wobei zwischen zwei benachbarten Ebenen ein Zwischenraum (ZR) freigehalten ist, in welchen keiner der Rührerflügel (11) hineinragt, insbesondere dass die Ebenen (E1, E2, ... , E5) in axialer Richtung äquidistant zueinander angeordnet sind.

6. Vorrichtung nach Anspruch 5, **dadurch gekennzeichnet, dass** jeder Zwischenraum (ZR) eine senkrecht zur Rotationsachse (A) der Rührerwelle (10) projizierte Fläche (Z) abdeckt, die mindestens 5 Prozent und höchstens 90 Prozent derjenigen projizierten Fläche (F) entspricht, die die Rührerflügel (11) einer Ebene und der zugehörige Teilbereich der Rührerwelle (10) abdecken.

7. Vorrichtung nach einem der Ansprüche 5 oder 6, **dadurch gekennzeichnet, dass** in jeder der Ebenen (E1, E2, ..., E5) mindestens zwei, insbesondere drei, Rührerflügel (11) angeordnet sind, insbesondere radial-symmetrisch angeordnet sind.

8. Vorrichtung nach einem der Ansprüche 5 bis 7, **dadurch gekennzeichnet, dass** bezogen auf die Rührerflügel (11) einer der Ebenen (E3) die Rührerflügel (11) einer dazu benachbarten Ebene (E4) azimuthal versetzt, insbesondere radial-symmetrisch und azimuthal versetzt, angeordnet sind.

9. Vorrichtung nach einem der Ansprüche 5 bis 8, **dadurch gekennzeichnet, dass** zumindest auf der ersten und/oder letzten Ebene (E1; E5) reduzierte Rührerflügel (11', 11") angeordnet sind, die eine geringere Flächenausdehnung als die in den übrigen Ebenen (E2 - E4) angeordneten Rührerflügel (11) aufweisen.

10. Vorrichtung nach einem der Ansprüche 5 bis 9, **dadurch gekennzeichnet, dass** die Rührerflügel (11) zumindest in den ersten zwei Ebenen (E1, E2) in einer ersten, Schrägstellung (+) zur Rotationsachse (A) der Rührerwelle (10) angeordnet sind und die Rührerflügel (11) zumindest in den letzten zwei Ebenen (E4, E5) in einer dazu umgekehrten Schrägstellung angeordnet sind, wobei die erste Schrägstellung (+) eine die Glasschmelze (3) zu dem Auslass (5) des Rührgefäßes (2) hin fördernde Verdrängung bewirkt.

11. Vorrichtung nach einem der vorhergehenden Ansprüche,
**dadurch gekennzeichnet, dass** das an dem jeweiligen Rührerflügel (11) angeordnete mindestens eine Einbauelement (11E) an der rückseitigen Paddelfläche (11B) angeordnet ist.

12. Vorrichtung nach einem der vorhergehenden Ansprüche,
**dadurch gekennzeichnet, dass** das an dem jeweiligen Rührerflügel (11) angeordnete mindestens eine Einbauelement (11E) einem einzelnen, insbesondere plattenförmigen, Element (11E; 11E**) oder einer Gruppe von mehreren parallel angeordneten, insbesondere stabförmigen, Elementen (11E*) entspricht.

13. Vorrichtung nach einem der vorhergehenden Ansprüche,
**dadurch gekennzeichnet, dass** das mindestens eine Einbauelement (11E, 11E**) eine im Wesentlichen dreieckige Form aufweist.

14. Vorrichtung nach einem der vorhergehenden Ansprüche,
**dadurch gekennzeichnet, dass** die rückseitige Paddelfläche (11B) und/oder stirnseitige Paddelfläche (11A) gewölbt ist, wobei insbesondere die stirnseitige Paddelfläche (11A) eine gewölbte Form, insbesondere eine in Umlaufrichtung (U) konvex gewölbte Form, aufweist.

15. Vorrichtung nach einem der vorhergehenden Ansprüche,
**dadurch gekennzeichnet, dass** das Einbauelement sich in einer Richtung erstreckt, die senkrecht zu der Paddelfläche (11B) ist bzw. senkrecht zur Sehne (S) der gewölbten Paddelfläche (11B) ist.

16. Vorrichtung nach einem der vorhergehenden Ansprüche,
**dadurch gekennzeichnet, dass** die äußeren Flügelenden, insbesondere Flügelkanten, der Rührerflügel (11) als abgerundete Randbereiche (11R) ausgebildet sind.

17. Vorrichtung nach einem der vorhergehenden Ansprüche,
**dadurch gekennzeichnet, dass** die paddelförmigen Rührerflügel (11) als flache Elemente ausgebildet sind, die einen Randbereich, insbesondere einen zur Innenwandung des Rührgefäßes (2) ausgerichteten Randbereich (11S), aufweisen, der eine Dicke von maximal 5 mm aufweist.

18. Vorrichtung nach einem der vorhergehenden Ansprüche,
**dadurch gekennzeichnet, dass** der Durchmesser (D1) der Rührerwelle (10) mindestens 25 Prozent und höchstens 50 Prozent des Durchmessers (D2) des Rührgefäßes (2) entspricht.

19. Rührvorrichtung (1) für eine Vorrichtung nach Anspruch 1 , wobei die Rührvorrichtung (1) in einem die Glasschmelze (3) aufnehmendes Rührgefäß (2) anordnenbar ist, das einen Einlass (4) und einen Auslass (5) aufweist, wobei die Rührvorrichtung (1) eine in Umlaufrichtung (U) drehbare Rührwelle (10) und eine Vielzahl von Rührerflügeln (11) aufweist, die entlang der Rührwelle (10) beabstandet zueinander angeordnet sind, wobei zumindest die meisten der Vielzahl von Rührerflügeln als paddelförmige Elemente (11) ausgebildet sind, die jeweils eine stirnseitige die Glasschmelze (3) verdrängende Paddelfläche (11A) und eine rückseitige Paddelfläche (11B) aufweisen, und dass an jeweils einer der Paddelflächen (11B) mindestens ein Einbauelement (11E) angeordnet ist, das sich von der Paddelfläche (11B) zu der Rührwelle (10) hin erstreckt,
**dadurch gekennzeichnet, dass** das mindestens eine Einbauelement (11E) jeweils an der rückseitigen Paddelfläche (11B) angeordnet ist und eine Kante (11K) aufweist, die sich von der Rührerwelle (10) in radialer Richtung (R) entlang der Paddelfläche (11B) mit einer Kantenlänge erstreckt, die um einen vorgebbaren Abstand (X) geringer als die in radialer Richtung (R) sich erstreckende Länge (L) der Paddelfläche (11B) ist.

20. Verwendung einer Vorrichtung nach einem der Ansprüche 1-18 zum Homogenisieren einer Glasschmelze (3) mit mindestens einer Rührvorrichtung (1) nach Anspruch 19, die in einem die Glasschmelze (3) aufnehmendes Rührgefäß (2) angeordnet ist, das einen Einlass (4) und einen Auslass (5) aufweist, wobei die Rührvorrichtung (1) eine in Umlaufrichtung (U) drehbare Rührwelle (10) und eine Vielzahl von Rührerflügeln (11) aufweist, die entlang der Rührwelle (10) beabstandet zueinander angeordnet sind, wobei zumindest die meisten der Vielzahl von Rührerflügeln als paddelförmige Elemente (11) ausgebildet sind, die jeweils eine stirnseitige die Glasschmelze (3) verdrängende Paddelfläche (11A) und eine rückseitige Paddelfläche (11B) aufweisen, und dass an jeweils einer der Paddelflächen (11B) mindestens ein Einbauelement (11E) angeordnet ist, das sich von der Paddelfläche (11B) zu der Rührwelle (10) hin erstreckt,
**dadurch gekennzeichnet, dass** das mindestens eine Einbauelement (11E) jeweils an der rückseitigen Paddelfläche (11B) angeordnet ist und eine Kante (11K) aufweist, die sich von der Rührerwelle (10) in radialer Richtung (R) entlang der Paddelfläche (11B) mit einer Kantenlänge erstreckt, die um einen vorgebbaren Abstand (X) geringer als die in radialer Richtung (R) sich erstreckende Länge (L) der Paddelfläche (11B) ist.

## Claims

1. A device for homogenizing a glass melt (3), comprising at least one stirring device (1) arranged in a stirring vessel (2) which accommodates the glass melt (3) and which comprises an inlet (4) and an outlet (5), wherein the stirring device (1) comprises a stirrer shaft 10) rotatable in the direction of rotation (U), and a plurality of stirrer paddles (11) spaced apart from one another along the stirrer shaft (10), wherein at least most of the plurality of stirrer paddles being designed as paddle-shaped elements (11), each of which has a front-facing paddle surface (11A) for displacing the glass melt (3) and has a rear-facing paddle surface (11B), and wherein at least one built-in element (11E) is arranged on each one of the paddle surfaces (11B), the element extending from the paddle surface (11B) towards the stirrer shaft (10),
**characterized in that** the at least one built-in element (11E) is arranged on the rear-facing paddle surface (11B) and comprises an edge (11K) extending from the stirrer shaft (10) in the radial direction (R) along the paddle surface (11B) by an edge length which is, by a predeterminable distance (X), less than the length (L) of the paddle surface (11B) extending in the radial direction (R).

2. The device according to claim 1, **characterized in that** the predeterminable distance (X) is 10 to 50 percent, in particular 20 to 30 percent, of the length (L) of the paddle surface.

3. The device according to claim 1 or 2, **characterized in that** the stirring device (1) has a gap (SP) between the outer ends, in particular the edges, of the stirrer paddles (11) and the inner wall of the stirring vessel (2), in particular a gap (SP) having a size which corresponds to at least 4.5% and at most 10.5% of the diameter (D2) of the stirring vessel (2).

4. The device according to claim 3, **characterized in that** the predeterminable distance (X) corresponds to 0.5 to 2 times the size of the gap (SP).

5. The device as claimed in claim 1, wherein the paddle-shaped stirrer paddles (11) are arranged in the axial direction (A) along the stirrer shaft (10) at several respective levels (E1, E2, ..., E5) with an intermediate space (ZR) between each two adjacent levels, which are kept free of a reach of said stirrer paddles (11), in particular wherein the levels (E1, E2, ..., E5) are arranged equidistantly in the axial direction.

6. The device according to claim 5, **characterized in that** each intermediate space (ZR) covers an area (Z) projected perpendicular to the axis of rotation (A) of the stirrer shaft (10), wherein said projected area corresponds to at least 5 percent and at most 90 percent of that projected area (F) that is covered by said stirrer paddles (11) at one of said levels and by the associated partial region of the stirrer shaft (10).

7. The device according to claim 5 or 6, **characterized in that** at least two, in particular three, stirrer paddles (11) are arranged at each of the respective levels (E1, E2, ..., E5), in particular radially symmetrically.

8. The device according to one of the claims 5 to 7, **characterized in that** the stirrer paddles (11) arranged at one of said respective levels (E4) are arranged azimuthally offset, in particular radially symmetrically and azimuthally offset, in relation to said stirrer paddles (11) at another adjacent one of the respective levels (E3).

9. The device according to one of the claims 5 to 8, **characterized in that** at least at the first and/or last level (E1; E5), reduced stirrer paddles (11', 11") are arranged which have a smaller surface area than those stirrer paddles (11) arranged at the other levels (E2 - E4).

10. The device according to one of the claims 5 to 9, **characterized in that** the stirrer paddles (11) are arranged at least at the first two levels (E1, E2) in a first inclined position (+) relative to the axis of rotation (A) of the stirrer shaft (10) and that the stirrer paddles (11) at the at least two last levels (E4, E5) are arranged in an inclined position reversed thereto, wherein said first inclined position (+) causes a conveying displacement of the glass melt (3) towards the outlet (5) of the stirring vessel (2).

11. The device according to one of the preceding claims, **characterized in that** the at least one built-in element (11E) arranged on each of the respective stirrer paddle (11) is arranged on the rear-facing paddle surface (11B).

12. The device according to one of the preceding claims, wherein the at least one built-in element (11E) arranged on the respective stirrer paddle corresponds to a single, in particular plate-shaped, element or to a group of several parallel, in particular bar-shaped, elements (11E *).

13. The device as claimed in one of the preceding claims, **characterized in that** the at least one built-in element (11E, 11E **) has an essentially triangular shape.

14. The device according to one of the preceding claims, **characterized in that** the rear-facing paddle surface (11B) and/or the front-facing paddle surface (11A) is curved, in particular the front-facing paddle surface (11A) has a curved shape, in particular a convex arched shape in the direction of rotation (U).

15. The device according to one of the preceding claims, **characterized in that** the built-in element extends in a direction which is perpendicular to the paddle surface (11B) or perpendicular to the chord (S) of the curved paddle surface (11B).

16. The device according to one of the preceding claims, **characterized in that** the outer paddle ends, in particular paddle edges, of the stirrer paddles (11) are designed as rounded edge regions (11R).

17. The device according to one of the preceding claims, **characterized in that** the paddle-shaped stirrer paddles (11) are designed as flat elements having an edge region, in particular an edge region (11S) which is aligned with the inner wall of the stirring vessel (2), the region having a thickness of at maximum 5 mm.

18. The device according to one of the preceding claims, **characterized in that** the diameter (D1) of the stirrer shaft (10) corresponds to at least 25% and at most 50% of the diameter (D2) of the stirring vessel (2).

19. A stirring device (1) for a device of claim 1, wherein the stirring device (1) is arranged in a stirring vessel (2) which accommodates the glass melt (3) and which comprises an inlet (4) and an outlet (5), wherein the stirring device (1) comprises a stirrer shaft 10) rotatable in the direction of rotation (U), and a plurality of stirrer paddles (11) spaced apart from one another along the stirrer shaft (10), wherein at least most of the plurality of stirrer paddles being designed as paddle-shaped elements (11), each of which has a front-facing paddle surface (11A) for displacing the glass melt (3) and has a rear-facing paddle surface (11B), and wherein at least one built-in element (11E) is arranged on each one of the paddle surfaces (11B), the element extending from the paddle surface (11B) towards the stirrer shaft (10),
**characterized in that** the at least one built-in element (11E) is arranged on the rear-facing paddle surface (11B) and comprises an edge (11K) extending from the stirrer shaft (10) in the radial direction (R) along the paddle surface (11B) by an edge length which is, by a predeterminable distance (X), less than the length (L) of the paddle surface (11B) extending in the radial direction (R).

20. Use of a device of one of the claims 1-18 for homogenizing a glass melt (3) with at least one stirring device (1) of claim 19, which is arranged in a stirring vessel (2) which accommodates the glass melt (3) and which comprises an inlet (4) and an outlet (5), wherein the stirring device (1) comprises a stirrer shaft 10) rotatable in the direction of rotation (U), and a plurality of stirrer paddles (11) spaced apart from one another along the stirrer shaft (10), wherein at least most of the plurality of stirrer paddles being designed as paddle-shaped elements (11), each of which has a front-facing paddle surface (11A) for displacing the glass melt (3) and has a rear-facing paddle surface (11B), and wherein at least one built-in element (11E) is arranged on each one of the paddle surfaces (11B), the element extending from the paddle surface (11B) towards the stirrer shaft (10),
**characterized in that** the at least one built-in element (11E) is arranged on the rear-facing paddle surface (11B) and comprises an edge (11K) extending from the stirrer shaft (10) in the radial direction (R) along the paddle surface (11B) by an edge length which is, by a predeterminable distance (X), less than the length (L) of the paddle surface (11B) extending in the radial direction (R).

## Revendications

1. Un dispositif pour homogénéiser un bain de verre (3), comprenant au moins un dispositif d'agitation (1) agencé dans un récipient d'agitation (2) recevant la masse fondue de verre (3) et qui comprend une entrée (4) et une sortie (5), dans lequel le dispositif d'agitation (1) comprend un arbre agitateur (10) pouvant tourner dans le sens de rotation (U) et une pluralité de palettes d'agitation (11) espacées les unes des autres le long de l'arbre agitateur (10), dans lequel au moins la plupart des palettes d'agitation sont conçues comme des éléments en forme de palette (11), chacun présentant une surface de palette (11A) orientée vers l'avant pour déplacer la masse de verre fondue (3) et une surface de palette orientée vers l'arrière (11B), et dans lequel au moins un élément intégré (11E) est disposé sur chacune des surfaces de palette (11B), l'élément s'étendant de la surface de palette (11B) vers l'arbre agitateur (10),
**caractérisé en ce que** le ou les élément(s) intégré(s) (11E) est/sont agencés sur la surface de palette orientée vers l'arrière (11B) et comporte(nt) un bord (11K) s'étendant à partir de l'arbre agitateur (10) suivant la direction radiale (R) le long de la surface de palette (11B) par une longueur de bord qui est inférieure d' une distance prédéterminable (X) à la longueur (L) de la surface de palette (11B) s'étendant suivant la direction radiale (R).

2. Le dispositif selon la revendication 1, **caractérisé en ce que** la distance prédéterminable (X) est de 10 à 50%, en particulier de 20 à 30%, de la longueur (L) de la surface de palette.

3. Le dispositif selon la revendication 1 ou 2, **caractérisé en ce que** le dispositif d'agitation (1) comporte un espace (SP) entre les extrémités extérieures, en particulier les bords, des palettes d'agitateur (11) et la paroi intérieure du récipient d'agitation (2), en particulier un espace (SP) ayant une taille qui correspond à au moins 4,5% et au plus 10,5% du diamètre (D2) du récipient d'agitation (2).

4. Le dispositif selon la revendication 3, **caractérisé en ce que** la distance prédéterminable (X) correspond à 0,5 à 2 fois la taille de l'espace (SP).

5. Le dispositif selon la revendication 1, **caractérisé en ce que** les palettes d'agitation en forme de palette (11) sont disposées suivant la direction axiale (A) le long de l'arbre agitateur (10) à plusieurs niveaux respectifs (E1, E2, ..., E5) avec un espace intermédiaire (ZR) entre chaque deux niveaux adjacents, qui sont maintenus libres d'une portée desdites palettes d'agitation (11), en particulier dans lequel les niveaux (E1, E2, ..., E5) sont disposés équidistants suivant la direction axiale.

6. Le dispositif selon la revendication 5, **caractérisé en ce que** chaque espace intermédiaire (ZR) recouvre une zone (Z) projetée perpendiculairement à l'axe de rotation (A) de l'arbre agitateur (10), dans lequel ladite zone projetée correspond au moins 5 pour cent et au plus 90 pour cent de cette zone projetée (F) couverte par lesdites palettes d'agitation (11) à l'un desdits niveaux et par la région partielle associée de l'arbre agitateur (10).

7. Le dispositif selon la revendication 5 ou 6, **caractérisé en ce qu'**au moins deux, en particulier trois palettes d'agitation (11) sont disposées à chacun des niveaux respectifs (E1, E2, ..., E5), en particulier radialement symétriquement.

8. Le dispositif selon l'une quelconque des revendications 5 à 7, **caractérisé en ce que** les palettes d'agitation (11) agencées à l'un desdits niveaux respectifs (E4) sont disposées avec un décalage azimutal , en particulier en décalage radial, symétrique et azimutal, relativement aux dites palettes d'agitation (11) d'un autre niveau respectif adjacent (E3).

9. Le dispositif selon l'une quelconque des revendications 5 à 8, **caractérisé en ce qu'**au moins au premier et/ou au dernier niveau (E1; E5), sont disposées des palettes d'agitation (11', 11 ") réduites avec une surface plus petite que celle des palettes d'agitation (11) disposées aux autres niveaux (E2 - E4).

10. Le dispositif selon l'une quelconque des revendications 5 à 9, **caractérisé en ce que** les palettes d'agitation (11) sont disposées au moins aux deux premiers niveaux (E1, E2) dans une première position inclinée (+) par rapport à l'axe de rotation (A) de l'arbre agitateur (10) et **en ce que** les palettes d'agitation (11) disposées à au moins les deux derniers niveaux (E4, E5) présentent une position inclinée inversée, dans lequel ladite première position inclinée (+) provoque un déplacement de la masse de verre fondue (3) vers la sortie (5) du récipient d'agitation (2).

11. Le dispositif selon l'une quelconque des revendications précédentes, **caractérisé en ce que** le ou les élément(s) intégré(s) (11E) est/sont disposé(s) sur chacune des palettes d'agitation respectives (11), disposé(s) sur la surface de palette (11B) orientée vers l'arrière.

12. Le dispositif selon l'une quelconque des revendications précédentes, dans lequel le ou les élément(s) intégré(s) (11E) est/sont disposé(s) sur la palette d'agitation respectif correspond à un unique élément, spécifiquement en forme de plaque, ou à un groupe de plusieurs éléments parallèles (11E *), spécifquement en forme de barre.

13. Le dispositif selon l'une quelconque des revendications précédentes, **caractérisé en ce que** le ou les élément(s) intégré(s) (11E, 11E **) présente(nt) une forme essentiellement triangulaire.

14. Le dispositif selon l'une quelconque des revendications précédentes, **caractérisé en ce que** la surface de palette (11B) orientée vers l'arrière et/ou la surface de palette (11A) orientée vers l'avant est incurvée, en particulier la surface de palette (11A) orientée vers l'avant présente une forme incurvée, en particulier une forme arquée convexe dans le sens de rotation (U).

15. Le dispositif selon l'une quelconque des revendications précédentes, **caractérisé en ce que** l'élément intégré s'étend suivant une direction perpendiculaire à la surface de palette (11B) ou perpendiculaire à la corde (S) de la surface de palette incurvée (11B).

16. Le dispositif selon l'une quelconque des revendications précédentes, **caractérisé en ce que** les extrémités des palette extérieures, en particulier les bords de palette, des palettes d'agitation (11) sont conçues comme des régions de bord arrondi (11R).

17. Le dispositif selon l'une quelconque des revendications précédentes, **caractérisé en ce que** les palettes d'agitation en forme de palette (11) sont conçues comme des éléments plats ayant une région de bordure, en particulier une région de bord (11S) qui est alignée avec la paroi intérieure du récipient d'agitation (2), la région ayant une épaisseur maximale de 5 mm.

18. Le dispositif selon l'une quelconque des revendications précédentes, **caractérisé en ce que** le diamètre (D1) de l'arbre agitateur (10) correspond à au moins 25% et au plus 50% du diamètre (D2) du récipient d'agitation (2).

19. Un dispositif d'agitation (1) pour un dispositif selon la revendication 1, dans lequel le dispositif d'agitation (1) est disposé dans un récipient d'agitation (2) recevant du verre fondu (3) et qui comprend une entrée (4) et une sortie (5), dans lequel le dispositif d'agitation (1) comprend un arbre agitateur (10) pouvant tourner dans le sens de rotation (U) et plusieurs palettes d'agitation (11) espacées les unes des autres le long de l'arbre agitateur (10), dans lequel la plupart des palettes d'agitation sont conçues comme des éléments en forme de palette (11) dont chacun a une surface de palette (11A) orientée vers l'avant pour déplacer la masse fondue de verre (3) et a une surface de palette orientée vers l'arrière (11B), et dans lequel au moins un élément intégré (11E) est disposé sur chacune des surfaces de palette (11B), l'élément s'étendant depuis la surface de palette (11B) vers l'arbre agitateur (10)
**caractérisé en ce que** le ou les élément(s) intégré(s) (11E) est/sont agencé(s) sur la surface de palette orientée vers l'arrière (11B) et comporte(nt) un bord (11K) s'étendant depuis l'arbre agitateur (10) suivant la direction radiale (R) le long de la surface de palette (11B) par une longueur de bord qui est inférieure d'une distance prédéterminable (X) à la longueur (L) de la surface de palette (11B) s'étendant dans la direction radiale (R).

20. Utilisation d'un dispositif selon l'une des revendications 1 à 18 pour homogénéiser une masse de verre fondu (3) avec au moins un dispositif d'agitation (1) selon la revendication 19, qui est disposé un récipient d'agitation (2) recevant la masse de verre fondu (3) et qui comprend une entrée (4) et une sortie (5), dans lequel le dispositif agitateur (1) comprend un arbre agitateur (10) pouvant tourner dans le sens de rotation (U) et une pluralité de palettes d'agitation (11) espacées les uns des autres le long de l'arbre agitateur (10), dans lequel au moins la plupart des palettes d'agitation sont conçues sous la forme d'éléments en forme de palette (11), dont chacun présente une surface de palette (11A) orientée vers l'avant pour déplacer le verre fondu (3) et une surface de palette orientée vers l'arrière (11B), et dans lequel au moins un élément intégré (11E) est disposé sur chacune des surfaces de palette (11B), l'élément s'étendant depuis la surface de palette (11B) vers l'arbre agitateur (10),
**caractérisé en ce que** le ou les élément(s) intégré(s) (11E) est/sont agencé(s) sur la surface de palette orientée vers l'arrière (11B) et comprend un bord (11K) s'étendant à partir de l'arbre agitateur (10) suivant la direction radiale (R) le long de la surface de palette (11B) par une longueur de bord qui est inférieure d'une distance prédéterminable (X) à la longueur (L) de la surface de palette (11B) s'étendant dans la direction radiale (R).
